# EUROPÄISCHE PATENTSCHRIFT

(11) **EP 4 222 236 B1**
(45) Veröffentlichungstag und Bekanntmachung des Hinweises auf die Patenterteilung: **01.01.2025**
(21) Anmeldenummer: 22812413.7
(22) Anmeldetag: 07.11.2022
(51) Int. Cl.: C10M 117/00

(54) **VERFAHREN ZUR HERSTELLUNG VON LITHIUMKOMPLEXSEIFEN- UND LITHIUM-CALCIUMKOMPLEXSEIFEN-SCHMIERFETTEN**
METHOD FOR PRODUCING LUBRICATING GREASES OF LITHIUM COMPLEX SOAPS AND LITHIUM-CALCIUM COMPLEX SOAPS
PROCÉDÉ DE PRODUCTION DE GRAISSES LUBRIFIANTES DE SAVONS COMPLEXES DE LITHIUM ET DE SAVONS COMPLEXES DE LITHIUM-CALCIUM

(30) Priorität: 16.12.2021 DE 102021133469
(43) Veröffentlichungstag der Anmeldung: 09.08.2023
(73) Patentinhaber: FUCHS SE, 68169 Mannheim (DE)
(72) Erfinder: ERKEL, Hans Jürgen, 66892 Bruchmühlbach-Miesau (DE); BINKLE, Olaf, 66459 Kirkel (DE); GOERZ, Torsten, 67691 Hochspeyer (DE)
(74) Vertreter: Müller Schupfner & Partner Patent- und Rechtsanwaltspartnerschaft mbB (Hamburg)
(86) Internationale Anmeldenummer: PCT/DE2022/100822
(87) Internationale Veröffentlichungsnummer: WO 2023/110001

(56) Entgegenhaltungen:
- US-A- 4 582 619
- US-A1- 2019 300 813

## Beschreibung

Die Erfindung betrifft ein Verfahren zur Herstellung von Lithiumkomplexseifen-Schmierfetten oder Lithium-Calciumkomplexseifen-Schmierfetten und entsprechende Schmierfette hergestellt nach diesem Verfahren und deren Verwendung.

### Einführung und Stand der Technik

Lithiumseifen sind als Verdicker in Schmierfetten seit langem bekannt. Als Verdicker wird hierbei eine mit Lithiumhydroxid verseifte organische Säure, meist eine Fettsäure, in einem Basisöl eingesetzt. Gebräuchlich ist z.B. der Einsatz von 12-Hydroxystearinsäure, womit dann Lithium-12-Hydroxystearat als Verdicker eingesetzt wird. Fette auf Basis von Lithiumseifen werden als (einfache) Lithiumseifen-Schmierfette bezeichnet.

Im Unterschied beruht die Herstellung von Lithiumkomplexseifen-Schmierfetten auf einem Verdicker, der aus der Umsetzung von Lithiumhydroxid mit einer Fettsäure und einem Komplexierungsmittel herstellbar ist. Auch hier ist eine langkettige Hydroxyfettsäure häufig die Fettsäure der Wahl, während das Komplexierungsmittel eine kürzerkettige Dicarbonsäure ist. Schmierfette auf der Basis von Lithiumkomplexseifen als Verdicker zeichnen sich aus durch hohe Tropfpunkte, gute Wasserbeständigkeit und weite Einsatztemperaturbereiche.

Die Vorstellung ist hierbei, dass durch die gemeinsame, interagierende Zusammenlagerung beider Seifen, d.h. dem Lithiumsalz der Hydroxyfettsäure und der Dicarbonsäure, ein Seifenmischverband entsteht, stabilisiert über Wasserstoffbrücken. Die häufig kurzkettigeren Dicarbonsäuren bzw. Dicarbonsäuresalze können Bindungskräfte zwischen den meist langkettigen Fettsäureseifenmolekülen als "Brückenbildner" schaffen. Dies führt zu einer Anhebung des Tropfpunktes über das gewöhnliche Maß einer "einfachen" Lithiumseife (z. B. maximal bis 190°C - 210°C) hinaus, weil beim Aufschmelzen zusätzliche Bindungskräfte überwunden werden müssen. Lithiumkomplexseifen-Schmierfette können durch Tropfpunkte deutlich größer 250°C gekennzeichnet sein. Als Rohstoffe werden häufig 12-Hydroxystearinsäure, Lithiumhydroxid bzw. eine Lösung / Aufschlämmung von Lithiumhydroxid und aliphatischen Dicarbonsäuren wie Adipinsäure (C6), Azelainsäure (C8), Sebacinsäure (C10) oder Borsäure eingesetzt.

Lithiumkomplexseifen-Schmierfette werden somit typischerweise durch gemeinsame Verseifung zumindest einer langkettigen Hydroxyfettsäure und zumindest einer Dicarbonsäure in der Wärme in Gegenwart eines Basisöls oder Basisöl-Gemisches hergestellt. Geeignete Basisöle sind z.B. paraffinische oder naphthenische Mineralöle oder deren Mischung (Gruppe 1 Öle), Syntheseöle wie beispielsweise Polyalfaolefine, Polyakylenglykole oder Gruppe II-Öle, einschließlich jeweils deren Gemischen. Ebenso können Silikonöle als Basisöl eingesetzt werden.

Die Herstellung von Lithiumkomplexseifen in esterbasierten Basisölen gelingt nicht direkt, da die Bildung unerwünschter Reaktionsprodukte in Konkurrenz zur Verseifungsreaktion tritt. Die Lithiumseife kann dabei auch indirekt über Verseifung eines Dicarbonsäureesters gebildet werden, der seinerseits als Zwischenprodukt zwischen Dicarbonsäure und Alkohol (auch mehrwertige Alkohole) gebildet werden kann. Der Einsatz von Fertigseifen zur Umgehung einer (Teil-)Hydrolyse eingesetzter Ester ist für die Ausbildung der Komplexseifenstruktur schwierig.

Bei den Herstellungsverfahren nach dem Stand der Technik erfolgt die Verseifung üblicherweise im Basisöl. In der US 2898296 wird die Herstellung eines Lithiumkomplexseifen-Schmierfettes ausgehend von einer Fettsäure und einer Dicarbonsäureseife offenbart, die gemeinsam in einem Basisöl zusammen mit LiOH*H₂O (Monohydrat) verkocht werden.

Die US 2940930 A beschreibt die Herstellung eines Lithiumkomplexseifen-Schmierfettes in einem Batchprozess, wobei in einem ersten Schritt in einem Basisöl ein mehrwertiger Alkohol wie Ethylenglykol zu einer Mischung aus Mono- und Dicarbonsäure zugegeben wird und diese Mischung in einem nachgelagerten Schritt mit Lithiumhydroxid gemeinsam verseift wird.

Die US 4444669 A macht deutlich, dass der Herstellprozess einen großen Einfluss auf die Höhe des erzielbaren Tropfpunkts haben kann. Die Herstellung des Lithiumkomplexseifen-Schmierfettes erfolgt über die gemeinsame Zugabe einer Carbonsäure, Dicarbonsäure und wässrige LiOH-Lösung im Basisöl in einen kontinuierlich arbeitenden Reaktor. Für die Verseifung wird die Temperatur allmählich bis 176°C gesteigert, das sich bildende Wasser aus der Verseifungsreaktion wird durch Druckbeaufschlagung im System gehalten und nachfolgend kontrolliert entfernt. Ein kleiner Anteil an Wasser kann in die Reaktionszone eingeleitet werden.

Die US 3791973 A beschreibt die Herstellung eines Lithiumkomplexseifen-Schmierfettes mit Tropfpunkten über 260°C aus der nacheinander geschalteten Umsetzung von zunächst einer Hydroxyfettsäure im Basisöl mit einer konzentrierten wässrigen Lithiumhydroxid-Lösung in der Hitze und nachfolgend nach Abkühlung und Zugabe der aliphatischen Dicarbonsäure mit konzentrierter wässriger Lithiumhydroxid-Lösung und erneutem Erwärmen. Wichtig ist hier das Temperaturregime und die Umsetzungsgeschwindigkeit der aliphatischen Dicarbonsäure mit der Base. So entsteht eine Mischseife, bei welcher Lithium-Monocarboxylat durch die Di-Lithium-Dicarboxylate verknüpft ist.

Die EP 2361296 B1 beschreibt die Herstellung eines gemischten Komplexfetts basierend auf einer Lithiumseife auf Basis einer Hydroxyfettsäure mit den komplexierenden Calcium- oder Magnesiumseifen auf Basis einer Dicarbonsäure über einen Autoklavierungsprozess. Dabei werden die verdickerbildenden Rohstoffe in einem Basisöl mit einer geringen Menge Wasser zum Starten der Reaktion zusammengebracht. Erwähnenswert ist, dass der Tropfpunkt von Fetten auf Mineralölbasis um ca. 220°C liegt und bei Verwendung von Polyalkylenglykol-Basisölen höhere Tropfpunkte bis über 260°C erzielt werden können.

Werden sehr unpolare Basisöle wie beispielsweise Polyalphaolefine verwendet, werden hohe Tropfpunkte über 250°C für Lithiumkomplexseifen-Schmierfette nur schwerlich erzielt. Dies kann so erklärt werden, dass keine echte Komplexseife in Form eines aus beiden Carbonsäuren gebildeten Seifenverdickerverbandes vorliegt. Vielmehr liegt ein Gemisch der beiden Lithiumseifen, Fettsäuren und Dicarbonsäuren, separat vor, die nicht interagieren und nicht zu einem Mischseifenverband zusammengelagert sind. Die bei echten Lithiumkomplexseifen zusätzlich vorkommenden Wechselwirkungen, beispielsweise Wasserstoffbrückenbindungen, zwischen den beiden Lithiumseifentypen fehlen oder liegen nur in geringem Ausmaß vor. Dadurch liegt der Tropfpunkt auf einem vergleichsweise niedrigeren Niveau. Zur Erhöhung des Tropfpunktes müssen Tropfpunktverbesserer eingesetzt werden. Für Lithiumkomplexseifen-Schmierfette geeignete Tropfpunktverbesserer basieren häufig auf Alkylboratestern, deren Verwendung ist beispielsweise in WO 2016/123067 A1 beschrieben.

Die US 2010/0197535 A1 offenbart ein Verfahren zum Herstellen eines Seifenkonzentrats wie einer Lithium-Seife, Lithiumkomplex-Seife, Lithium-Calcium-Seife oder Calciumkomplex-Seife in einem Reaktionsextruder, wobei in einer ersten Zone ein Öl, wie hydriertes Rizinusöl, und das Metallhydroxid oder 12-Hydroxystearinsäure, ggf. als Bestandteil des Öls, und das Metallhydroxid und in einer weiteren Zone Komplexierungsmittel zugeführt werden. Nach der ersten Zone folgt ggf. eine Wassereinspritzzone, dann die Reaktionszone, eine Entlüftungszone und eine Kühlzone.

Aus der JP H11-302682 A ist ein Verfahren zur Herstellung eines Schmierfetts bekannt, wonach als Teil des Verfahrens eine wässrige Lösung von Lithiumhydroxid-Monohydrat und einer aliphatischen Dicarbonsäure mit einer in der Hitze homogenen Mischung aus Basisöl und Fettsäure oder Hydroxyfettsäure und ggf. einer weiteren Menge an aliphatischer Dicarbonsäure umgesetzt werden. Die Umsetzung mit der gelösten Monocarbonsäure startet erst in Gegenwart des Grundöls und der Dispergierhilfe. Lithiumhydroxid und Dicarbonsäure liegen in Wasser parallel vor, eine Verseifungsreaktion wird aber nicht herbeigeführt. Die Hydroxyfettsäure wird nicht zur bereits gebildeten Dicarbonsäureseife hinzugefügt.

US4582619 und US2019/300813 beschreiben die Herstellung von Lithiumkomplexseifen-Schmierfetten aus den Komponenten LiOH, Dicarbonsäure und Hydroxyfettsäure. Hierzu werden beide Säuren im Basisöl gemeinsam vorgelegt und danach mit wässriger Lithiumhydroxidlösung umgesetzt.

Allen oben beschriebenen Herstellungsverfahren ist gemeinsam, dass die Verseifung in dem Basisöl, das in der Regel olephil ist, durchgeführt wird.

Es wurden auch Herstellungswege beschrieben, um die Ausbildung eines Seifenverbandes im Falle gemischter Seifen auszubilden, der neben Lithiumseifen auch Erdalkaliseifen jeweils als Komplexseifen enthält.

### Aufgabe der Erfindung

Aufgabe der Erfindung ist es, ein Verfahren zur Herstellung von Lithiumkomplexseifen-Schmierfetten oder Lithium-Calciumkomplexseifen-Schmierfetten bereitzustellen, das eine möglichst einfache und energie-effiziente Prozessführung sowie eine sichere Handhabung der verwendeten Rohstoffe erlaubt. Auch sollen hohe Tropfpunkte erzielt werden und gegenüber herkömmlichen Verfahren weitere Rohstoffe einsetzbar sein, vor allem im Hinblick auf die einsetzbaren Dicarbonsäuren.

### Zusammenfassung der Erfindung

Die vorliegende Erfindung betrifft ein Verfahren zur Herstellung von Lithiumkomplexseifen-Schmierfetten oder Lithium-Calciumkomplexseifen-Schmierfetten nach Anspruch 1 und unterscheidet sich von bekannten Verfahren dahingehend, dass zunächst die Verseifung der Dicarbonsäure mit Lithiumhydroxid und/oder mit Calciumhydroxid in Substanz als Feststoff im Wässrigen erfolgt. Nach der Verseifung mit der Hydroxyfettsäure werden jeweils Komplexseifen-Schmierfette erhalten.

Bevorzugte Ausführungsformen sind Gegenstand der Unteransprüche oder nachfolgend dargestellt.

Das Verfahren zur Herstellung von Lithiumkomplexseifen-Schmierfetten oder Lithium-Calciumkomplexseifen-Schmierfett umfasst zumindest folgende Schritte:
- Verseifen einer oder mehrerer Dicarbonsäuren mit einer oder zwei Metallhydroxiden als Feststoff, vorzugsweise in Pulverform, gemäß einer der folgenden drei Alternativen:
   (A1) Verseifen mit Lithiumhydroxid, vorzugsweise in Pulverform, und einer oder mehreren Dicarbonsäuren oder
   (A2) Verseifen mit Lithiumhydroxid und Calciumhydroxid, vorzugsweise in Pulverform, und einer oder mehreren Dicarbonsäuren, oder
   (A3) Verseifen mit Calciumhydroxid, vorzugsweise in Pulverform, und einer oder mehreren Dicarbonsäuren,
   jeweils in einer wässrigen Umgebung aufweisend mehr als 80 Gew.% Wasser in Bezug auf alle flüssigen Einsatzstoffe (d.h. Einsatzstoffe die bei 25°C flüssig sind) zum Erhalt eines oder mehrerer Metallsalze der Dicarbonsäuren, wobei beide Dicarboxylgruppen der Dicarbonsäuren im wesentlichen vollständig verseift werden;
- in Kontakt bringen mit einer oder mehrerer flüssiger oder durch Erwärmen verflüssigter Hydroxyfettsäuren und Lösen des oder der Metallsalze in der flüssigen Hydroxyfettsäure;
- in Kontakt bringen mit Basisöl;
- Zugabe weiterer Metallhydroxide, wobei nach Alternative:
   (A1) Lithiumhydroxid oder Calciumhydroxid;
   (A2) Lithiumhydroxid und Calciumhydroxid oder nur Lithiumhydroxid oder nur Calciumhydroxid; oder
   (A3) Lithiumhydroxid
   zugegeben wird;
   zur Verseifung mit der zumindest einen Hydroxyfettsäure;
- Austreiben von Wasser unter Erhitzen;
- Erhitzen auf eine Endtemperatur; und
- Abkühlen und Zugabe von weiterem Basisöl.

Bevorzugt wird das Verfahren in oben bezeichneter Reihenfolge duchgeführt.

Bevorzugte Ausführungsformen sind Gegenstand der Unteransprüche oder nachfolgend beschrieben.

Die wässrige Umgebung ist durch eine flüssige Phase gekennzeichnet, die in Bezug auf die eingesetzten bei 25°C flüssigen Stoffe (= 100 Gew.%) zu größer 80 Gew.%, insbesondere zu größer 90 Gew.% Wasser umfasst und bevorzugt zu 100 Gew.% aus Wasser besteht. Sollte die eingesetzte Dicarbonsäure bei 25°C flüssig sein, zählt diese nicht zu den flüssigen Stoffen im Sinne dieser Definition.

Nach einer Ausführungsform der Erfindung wird eine Dicarbonsäure in Wasser bzw. in der wässrigen Umgebung vorgelegt, erhitzt (z.B. auf 60°C) und dann mit Metallhydroxid (z.B. Lithiumhydroxid), vorzugsweise in Pulverform, zur möglichst vollständigen Verseifung der Dicarbonsäure versetzt, ggf. auch leicht überstöchiometrisch.

Allerdings soll der stöchiometrische Überschuss beschränkt sein und insbesondere soll der Überschuss gering sein, z.B.
a) so gewählt werden, dass der Überschuss weniger als 10 mol%, vorzugsweise weniger als 5 mol% in Bezug auf die nachfolgend eingesetzte Hydroxyfettsäure beträgt oder
b) alternativ soll der Überschuss weniger als 10 mol% bezogen auf die Reaktion Dicarbonsäure mit dem Metallhydroxid (z.B. Lithiumhydroxid) betragen.

Vorzugsweise wird mit etwa der molaren Menge an Metallhydroxid (z.B. Lithiumhydroxid) in Bezug auf die Dicarbonsäure umgesetzt. Die Metallhydroxide werden zum Verseifen einer oder mehrerer Dicarbonsäuren in Substanz als Feststoff, vorzugsweise in Pulverfom, eingesetzt. Dies meint, dass diese nicht vorab in einem anderen Lösungsmittel gelöst werden sondern in der "wässrigen Umgebung". Die Zugabe der Base in Pulverform hat arbeitssicherheits-technische Vorteile: Es wird die Verwendung heißer Metallhydroxid-Lauge vermieden. Die Verseifung ist bereits nach kurzer Zeit abgeschlossen.

Das gebildete Di-Lithiumdicarboxylat bzw. Di-Metalldicarboxylat kann abhängig von der eingesetzten Dicarbonsäure schlecht wasserlöslich sein und kann in einem solchen Falle als ein feinverteiltes Salz ausfallen.

Im nächsten Schritt wird die Monohydroxycarbonsäure in Substanz, vorzugsweise als Feststoff, in trockener Form zugesetzt und die Mischung auf z.B. 85°C erhitzt. Dabei löst sich die Dicarbonsäureseife in der geschmolzenen Hydroxycarbonsäure. Bereits hier bildet sich die zur Bildung der Komplexseife erforderliche Mischung zwischen Hydroxycarbonsäure und Dicarbonsäure bzw. den jeweiligen Umsetzungsprodukten aus. Danach wird die Mischung in der notwendigen Menge an Basisöl aufgenommen (z.B. 45 Gew.% des Basisöls im fertigen Schmierfett), auf z.B. 90°C erhitzt und dann mit dem weiteren Metallhydroxid wie z.B. Lithiumhydroxid, insbesondere pulverförmig, zur Verseifung der Hydroxycarbonsäure versetzt. Nach einer gewissen Reaktionszeit wird zunächst auf z.B. 100°C erhitzt, um die Entwässerung des Ansatzes zu starten, die dann gefolgt bei z. B. 105°C vervollständigt wird, nachdem weiteres Basisöl zugesetzt wurde (z.B. 30% des Basisöls im fertigen Schmierfett).

Durch diese Reaktionsführung wurde die Komplexseifenbildung im wässrigen Medium gestartet und nach sicherer Bildung der Komplexseifenstruktur in ein oleophiles Basisöl überführt. Nach Entwässerung kann die restliche Menge an Basisöl zugegeben werden, das Reaktionsgemisch wird bis zur Endtemperatur von größer 120°C oder größer 160°C, vorzugsweise größer 180°C, z.B. auf 190 bis 210°C erhitzt, danach abgekühlt und in der Abkühlphase mit geeigneten Additiven zur Fertigstellung des Schmierfetts versetzt.

Über den beschriebenen Weg kann auch ein gemischtes Calcium - Lithium -Komplexseifen-Schmierfett hergestellt werden. Wahlweise kann dabei die komplexierende Dicarbonsäure mit Lithiumhydroxid oder Calciumhydroxid umgesetzt werden. Entsprechend wird die Hydroxycarbonsäure mit dem anderen Hydroxid umgesetzt. Ein wesentlicher Vorteil der gemischten Lithium-Calciumkomplexseifen-Schmierfette liegt in den niedrigeren Rohstoff- und Prozesskosten. Die Calcium - Lithium - Komplexseifen-Schmierfette sind vorzugsweise erhältlich aus einem Einsatz von Lithiumhydroxid zu Calciumhydroxid von 1 zu 9 bis 9 zu 1 (Gewichtsverhältnis).

Ein weiterer Vorteil der so hergestellten Lithiumkomplexseifen-Schmierfette bzw. Calcium - Lithium -Komplexseifen-Schmierfette liegt in der bevorzugten Möglichkeit der molaren Umsetzung der Metallhydroxide mit den Dicarbon- sowie Monohydroxycarbonsäuren. Hierdurch können Schmierfette ohne nicht umgesetzte Lithiumhydroxidanteile erhalten werden. Seit Juni 2020 wird geprüft, ob Lithiumhydroxid zukünftig als reprotoxisch Kategorie 1A - H360 FD einzustufen ist (CoRAP-Liste). Nach dem Stand der Technik werden Schmierfette mit Lithiumseifenverdickern häufig mit einem Lithiumhydroxidüberschuss hergestellt, da man wegen der schlechten Wasserlöslichkeit des Lithiumhydroxids durch einen Überschuss die vollständige Umsetzung der eingesetzten Carbonsäuren sicherstellen möchte.

### Detaillierte Beschreibung der Erfindung

Als Basisöle sind übliche, bei Raumtemperatur flüssige Schmieröle geeignet. Das Basisöl weist vorzugsweise eine kinematische Viskosität von 20 bis 2500 mm²/s, insbesondere von 40 bis 500 mm²/s, jeweils bei 40 °C auf. Der Begriff Basisöl umfasst vorliegend auch ein Gemisch von unterschiedlichen Basisölen.

Die Basisöle können als Mineralöle oder Syntheseöle klassifiziert werden. Als Mineralöle werden z.B. betrachtet naphthenbasische Mineralöle und paraffinbasische Mineralöle, gemäß Klassifizierung nach API Group I. Chemisch modifizierte aromaten- und schwefelarme Mineralöle mit geringem Anteil an gesättigten Verbindungen und gegenüber Group I-Ölen verbessertem Viskositäts-/Temperatur-Verhalten, klassifiziert nach API Group II und III, sind ebenfalls geeignet.

Als Syntheseöle genannt seien Polyether, Ester, Polyalphaolefine, Polyglykole und Alkylaromaten und deren Mischungen, sowie Silikonöle. Die Polyether-Verbindung kann freie Hydroxylgruppen aufweisen, aber auch vollständig verethert oder Endgruppen verestert sein und/oder aus einer Startverbindung mit einer oder mehreren Hydroxy- und/oder Carboxylgruppen (-COOH) hergestellt sein. Möglich sind auch Polyphenylether, ggf. alkyliert, als alleinige Komponenten oder besser noch als Mischkomponenten. Geeignet einsetzbar sind Ester einer aromatischen Di-, Tri- oder Tetracarbonsäure, mit einem oder in Mischung vorliegenden C2- bis C22-Alkoholen, Ester von Adipinsäure, Sebacinsäure, Trimethylolpropan, Neopentylglykol, Pentaerythrit oder Dipentaerythrit mit aliphatischen verzweigten oder unverzweigten, gesättigten oder ungesättigten C2- bis C22-Carbonsäuren, C18-Dimersäureestern mit C2- bis C22-Alkoholen, Komplexester, als Einzelkomponenten oder in beliebiger Mischung.

Die Lithiumkomplexseifen sind Verdicker auf Basis von Metallseifen, welche durch Umsetzung einer Dicarbonsäure mit Lithiumhydroxid und einer Hydroxycarbonsäure mit Lithiumhydroxid erhältlich sind. Möchte man alternativ zur reinen Lithiumkomplexseife einen Mischverdicker aus Lithium- und Calciumkomplexseife herstellen, setzt man a) die Dicarbonsäure mit Lithiumhydroxid und eine Hydroxycarbonsäure mit Calciumhydroxid oder b) die Dicarbonsäure mit Calciumhydroxid und die Hydroxycarbonsäure mit Lithiumhydroxid um.

Als Dicarbonsäuren können aliphatische Dicarbonsäuren mit Kettenlängen von C6 bis C12 wie beispielsweise Adipinsäure (C6), Azelainsäure (C8), Sebacinsäure (C10) eingesetzt werden. Zusätzlich können auch aromatische Dicarbonsäuren wie die Terephthalsäure eingesetzt werden. Letztere, für Lithiumkomplexfette eher ungewöhnliche Kombinationen, waren bislang nur über den Umweg der separaten Verseifung korrespondierender Terephthalsäureester vorab möglich, wobei der Alkohol hierbei vorzugsweise aus dem Gleichgewicht entfernt wird.

Über die erfindungsgemäße Umsetzung im wässrigen Milieu ist ein solches Verdickersystem einfacher zugänglich.

Als Hydroxycarbonsäuren können C12- bis C30-Hydroxycarbonsäuren oder deren Gemische verwendet werden, wobei i.d.R. bevorzugt die Hydroxycarbonsäuren mit 16 bis 20 Kohlenstoffatomen eingesetzt werden. Im Besonderen wird Hydroxystearinsäure beispielsweise als 9-Hydroxy-, 10-Hydroxy- oder 12-Hydoxystearinsäure eingesetzt. Es kann auch die Rizinolsäure als ungesättigte, linear gebaute Omega-9-Fettsäure verwendet werden. Aber auch die 12-Hydroxy-Behensäure (C22) oder die 10-Hydroxy-Palmitinsäure können als Hydroxyfettsäuren verwendet werden. Auch Dihydroxystearinsäuren wie die 9,10-Dihydroxystearinsäure können als Hydroxyfettsäuren eingesetzt werden. Die Hydroxycarbonsäuren sind mono-Carbonsäuren.

Das Verhältnis von Hydroxycarbonsäure zu Dicarbonsäure wird in der Regel in molaren Verhältnissen von 1:1 bis 10:1 eingestellt. Dies geschieht in Abhängigkeit von den gewünschten Eigenschaften des Fettes.

Darüber hinaus enthalten die erfindungsgemäßen Schmierfettzusammensetzungen übliche Additive gegen Korrosion, Oxidation und zum Schutz gegen Metalleinflüsse, die als Chelatverbindungen, Radikalfänger, Reaktionsschichtbildner und dergleichen wirken. Auch Additive, welche die Hydrolysebeständigkeit von Esterbasisölen verbessern, wie z.B. Carbodiimide oder Epoxide, können zugesetzt werden.

Übliche Additive im Sinne der Erfindung sind Antioxidationsmittel, Verschleißschutzmittel, Korrosionsschutzmittel, Detergentien, Farbstoffe, Schmierfähigkeitsverbesserer, Haftverbesserer, Viskositätsadditive, Reibungsminderer, Hochdruckadditive und Metalldeaktivatoren. Beispielhaft genannt seien:
primäre Antioxidationsmittel wie Amin-Verbindungen (z.B. Alkylamine oder 1-Phenylaminonaphthalin), aromatische Amine, wie z.B. Phenylnaphtylamine oder Diphenylamine oder polymere Hydroxychinoline (z. B. TMQ), Phenol-Verbindungen (z.B. 2.6-Di-tert-butyl-4-methylphenol), Zinkdithiocarbamat oder Zinkdithiophosphat;
Sekundäre Antioxidationsmittel wie Phosphite, z.B. Tris(2,4-ditert-butylphenylphosphit) oder Bis(2,4-ditert-butylphenyl)-pentaerythritoldiphosphit oder Thioether (z.B. Kresolthioether);
Hochdruckadditive und/oder Verschleißschutzadditive wie Schwefel oder organische Schwefelverbindungen wie z.B. Polysulfide oder geschwefelte Olefine, überbasische Calciumsulfonate, Thiophosphate, Phosphorverbindungen wie z.B. aminneutralisierte Alkylphosphate, anorganische oder organische Borverbindungen, Zinkdialkyldithiophosphat, organische Bismuthverbindungen; Thiophosphonate wie z.B. Triphenylthiophosphat, Phosphonate (Phosphite) wie z.B. Dioctylphosphonat, Alkylsulfonate, Thiocarbamate wie z.B. Methylen-bis(dibutyldithio-carbamate und Dithiocarbamate;
die "Öligkeit" verbessernde Wirkstoffe, wie C2- bis C6- Polyole, Fettsäuren, Fettsäureester oder tierische oder pflanzliche Öle;
Antikorrosionsmittel wie Sulfonate wie z.B. Petroleumsulfonat, Dinonylnaphtalinsulfonat oder Sorbitanester; neutrale oder überbasische Calciumsulfonate, Magnesiumsulfonate, Natriumsulfonate, Calcium- und Natrium-Naphthalinsulfonate, Sulfonsäureester, Dinatriumsebacat, Calcium-Salicylate, Aminphosphate, Succinate; Metalldeaktivatoren wie Benzotriazole wie z.B. Methylbenzotriazoldialkylamin, sterisch gehinderte Phenole, Natriumnitrit;
Viskositätsverbesserer wie z.B. Polymethacrylat, Polyisobutylen, oligo Dec-1-ene, Polystyrole;
Reibungsminderer teilweise mit Verschleißschutzeigenschaften wie Organomolybdänkomplexe (OMC), Molybdän-di-alkyl-dithiophosphate, Molybdän-di-alkyl-dithiocarbamate, insbesondere Molybdän-di-n-butyldithiocarbamat und Molybdän-di-alkyldithiocarbamat (Mo2mSn(dialkylcarbamat)2 mit m = 0 bis 3 und n = 4 bis 1), Zinkdithiocarbamat oder Zinkdithiophosphat; oder eine dreikernige Molybdänverbindung, die der Formel Mo₃SₖLₙQ_{z} entspricht, in der L unabhängig ausgewählte Liganden sind, die Organogruppen mit Kohlenstoffatomen aufweisen, wie sie in der US 6172013 B1 offenbart sind, um die Verbindung in dem Öl löslich oder dispergierbar zu machen, wobei n von 1 bis 4 reicht, k von 4 bis 7 reicht, Q aus der Gruppe von neutralen Elektronendonator-Verbindungen, bestehend aus Aminen, Alkoholen, Phosphinen und Ethern, ausgewählt ist, und z.B. im Bereich von 0 bis 5 liegt und nicht-stöchiometrische Werte umfasst (vergleiche DE 102007048091 A1);
organische Säuren wie z.B. Isostearinsäure, funktionelle Polymere wie z.B. Oleylamide, organische Verbindungen auf Polyether- und Amidbasis, z.B. Alkylpolyethylenglykoltetradecylenglykolether, PIBSI oder PIBSA, Partialglyceride, Dialkylhydrogenphosphonate, Alkylsuccinate.

Als Festschmierstoffe können z.B. Polymerpulver wie Polyamide, Polyimide oder PTFE, Melamincyanurat, Graphit, Metalloxide, Bornitrid, Silikate, z.B. Magnesiumsilikathydrat (Talkum), Natriumtetraborat, Kaliumtetraborat, Metallsulfide wie z. B. Molybdändisulfid, Wolframdisulfid oder Mischsulfide auf Basis von Wolfram, Molybdän, Bismuth, Zinn und Zink, anorganische Salze beispielsweise der Alkali- und Erdalkalimetalle, wie z.B. Calcium-Carbonat, Natrium- und Calciumphosphate, eingesetzt werden, ebenso Ruß oder andere auf Kohlenstoff basierende Festschmierstoffe wie beispielsweise Nanotubes.

Ebenso können Lignin-Derivate, wie Alkali- oder Erdalkaliligninsulfonate, insbesondere Calciumligninsulfonate, zum Erzielen spezifischer Eigenschaften eingesetzt werden (gemäß WO 2011095155 A1 oder US 8507421 B2). Die Lignin-Derivate und die Festschmierstoffe zählen nicht zu den Additiven.

Die Lithiumkomplexseifen-Schmierfette umfassen vorzugsweise:
a) 55 bis 95 Gew.% insbesondere 70 bis 90 Gew.%, des Basisöls;
b) 5 bis 25 Gew.%, insbesondere 5 bis 20 Gew.%, der Lithiumkomplexseife als Verdicker und ggf. die folgenden fakultativen Komponenten:
c) 0 bis 40 Gew.%, insbesondere 0,5 bis 10 Gew.%, Additive;
d) 0 bis 20 Gew.%, insbesondere 0 bis 5 Gew.%, anorganische Verdicker, wie z.B. Bentonit oder amorphes SiO₂ bzw. Kieselsäure; und
e) 0 bis 20 Gew.%, insbesondere 0,1 bis 15 Gew.%, Festschmierstoffe;
f) 0 bis 5 Gew.%, insbesondere 0,1 bis 5 Gew.% Lignin-Derivate.

Alternativ zum reinem Lithiumkomplexseifen-Schmierfett enthalten die Lithium-Calciumkomplexseifen-Schmierfette:
a) 55 bis 95 Gew.% insbesondere 70 bis 90 Gew.%, des Basisöls;
b) 5 bis 25 Gew.%, insbesondere 5 bis 20 Gew.%, der Lithium-Calciumkomplexseife als Verdicker, wobei das Verhältnis von Lithium- und Calciumgehalt innerhalb eines Verhältnisses von 90:10 bis 10:90, vorzugsweise 80:20 bis 20:80 frei wählbar ist, bezogen auf die Metallhydroxide (LiOH und Ca(OH)₂),
und ggf. die folgenden fakultativen Komponenten:
c) 0 bis 40 Gew.%, insbesondere 0,5 bis 10 Gew.%, Additive;
d) 0 bis 20 Gew.%, insbesondere 0 bis 5 Gew.%, anorganische Verdicker, wie z.B. Bentonit oder amorphes SiO₂ bzw. Kieselsäure; und
e) 0 bis 20 Gew.%, insbesondere 0,1 bis 15 Gew.%, Festschmierstoffe;
f) 0 bis 5 Gew.%, insbesondere 0,1 bis 5 Gew.% Lignin-Derivate.

Bevorzugt werden keine anorganischen Verdicker eingesetzt.

Die Gew.% -Angaben beziehen sich auf die Gesamtzusammensetzung und gelten jeweils unabhängig voneinander. Die Gew.%-Angaben addieren sich für jede Auswahl von Komponenten, einschließlich etwaiger fakultativer oben nicht genannter Komponenten zu 100 Gew.%.

Insbesondere wird der Verdicker bzw. die Seife als Verdicker so eingesetzt, dass die Zusammensetzung so viel Verdicker enthält, dass ein Konuspenetrationswert (Walkpenetration) von 220 bis 430 mm/10 (bei 25°C), vorzugsweise 265 bis 385 mm/10 (bei 25°C), erhalten wird (bestimmt nach DIN ISO 2137).

Das Verfahren wird so durchgeführt, dass der Verdicker in dem Lithiumkomplexseifen-Schmierfett bzw. in dem Lithium-Calciumkomplexseifen-Schmierfett durch in-situ-Reaktion der oben benannten Hydroxycarbonsäuren und Dicarbonsäuren mit Lithiumhydroxid bzw. Lithium- und Calciumhydroxid hergestellt wird, wobei die Verseifungsreaktion der Dicarbonsäure im Wässrigen durchgeführt wird. Im Anschluss wird das so gebildete Salz durch eine geschmolzene Hydroxyfettsäure oder eine in Substanz flüssige Hydroxyfettsäure aufgenommen, gefolgt von der Überführung in eine ölige Phase. Anschließend wird durch Zugabe von trockenem Lithiumhydroxid bzw. Calciumhydroxid in der stöchiometrisch benötigten Menge eine Verseifung der Hydroxyfettsäure durchgeführt. Danach wird im weiteren Temperaturverlauf das Wasser ausgetrieben und das Reaktionsgemisch auf eine definierte Endtemperatur erhitzt. Nach einer definierten Abkühlphase können bei Temperaturen von z.B. 60° bis 80°C übliche Additive, Feststoffe oder weitere Basisöl-Komponenten zugegeben werden.

Nach dem der vorliegenden Erfindung zugrundeliegenden Verfahren zur Herstellung der Lithiumkomplexfettseifen-Schmierfette bzw. der Lithium-Calciumkomplexseifen-Schmierfette wird zunächst eine Vorstufe (Grundfett) erstellt durch Zusammenfügen von zumindest
- der Dicarbonsäure und Wasser mit Lithiumhydroxid bzw. Calciumhydroxid bei vorzugsweise 20° bis 85°C, insbesondere 40° bis 70°C,
- Zugeben der Hydroxycarbonsäure bei vorzugsweise über 60°C oder über 75 °C, insbesondere zwischen größer 80 und 90°C,
- einer ersten Teilmenge des Basisöls und Lithiumhydroxid bzw. Calciumhydroxid bei vorzugsweise größer 70°C oder größer 80°C , insbesondere bei 90 bis 100°C,
- Auskochen des Wassers bei vorzugsweise zumindest 100°C, insbesondere größer 100°C oder größer 105°C (Austreibtemperatur),
- Zugabe einer weiteren Teilmenge Basisöl und Erhitzen auf eine definierte Endtemperatur größer 120°C, vorzugsweise zumindest 130°C oder bevorzugt von zumindest 150°C, z.B. 190 bis 210°C,
- Abkühlen des Grundfetts und dabei Zugabe weiterer Öle, Additive, Festschmierstoffe oder einer weiteren anderen Verdickerkomponente.

Vorzugsweise wird zur Herstellung des Lithiumkomplex-Basisfetts auf Temperaturen von über 180°C, insbesondere von zumindest 190°C erhitzt. Die Umsetzung zum Basisfett erfolgt in einem beheizten Reaktor, der auch als Autoklav oder Vakuumreaktor ausgeführt sein kann.

Nachfolgend wird in einem zweiten Schritt durch Abkühlen die Bildung der Verdickerstruktur vervollständigt und ggf. weitere Bestandteile wie Additive und/oder Basisöl zur Einstellung der gewünschten Konsistenz oder des gewünschten Eigenschaftsprofils zugegeben. Der zweite Schritt kann in dem Reaktor des ersten Schrittes ausgeführt werden, vorzugsweise wird aber das Basisfett aus dem Reaktor in einen separaten Rührkessel zum Abkühlen und Einmischen der ggf. weiteren Bestandteile überführt.

Nach einer Ausführungsform werden z.B. Lithium-Calciumkomplexseifen-Schmierfette hergestellt, indem als Basisverdicker ein Calcium-12-Hydroxistearat eingesetzt wird, welches mit Hilfe von Lithiumsebacat komplexiert wird. Bei der Herstellung dieser Basisfette werden Temperaturen zwischen 130° bis 160°C, vorzugsweise 150°C als Endtemperatur benötigt.

Die erfindungsgemäßen Schmierfette sind besonders geeignet zur Verwendung in oder für Gleitlager und Wälzlager in einem breiten industriellen Einsatzfeld. Lithiumkomplexfette sind Allroundfette mit erhöhtem Temperatur-Einsatzbereich. Durch den Einsatz der Calcium-Lithium-Komplexseife können die Rohstoffkosten positiv beeinflusst werden, da eine geringere Menge an Lithium eingesetzt werden kann.

Die Lithiumkomplexseifen-Schmierfette oder Lithium-Calciumkomplexseifen-Schmierfette hergestellt nach dem erfindungsgemäßen Verfahren weisen vorzugsweise einem hohen Tropfpunkt von über 260°C für die Lithiumkomplexseifen-Schmierfette und von über 190°C für die Lithium-Calciumkomplexseifen-Schmierfette auf.

In den nachfolgenden Beispielen werden die Kenndaten der erfindungsgemäßen Lithiumkomplexfette mit solchen, die über eine konventionelle Route hergestellt wurden, verglichen. Die konventionelle Herstellung wird hier für Beispiel 4 beschrieben und kann durch Analogieschluss auf die anderen Beispiele übertragen werden.

### Vergleichsbeispiel:

In einem beheizbarem Reaktionsgefäß mit Rührwerk wurden 718,1 g Polyalphaolefin PAO 40 vorgelegt und unter Rühren 186 g 12-Hydroxystearinsäure und 49,4 g Sebacinsäure zugegeben. Diese Mischung wird im Reaktionsgefäß unter Rühren auf 85°C erhitzt und 30 Minuten bei dieser Temperatur gehalten. Danach wird eine Mischung aus 46,5 Gramm Lithiumhydroxid-Monohydrat, welches in 150 Gramm heißem Wasser aufgeschlämmt wurde, zugegeben. Die Mischung wird 30 Minuten bei 85°C im Reaktionsgefäß unter Rühren gehalten. Anschließend wird die Temperatur auf 100°C gesteigert. Im Weiteren wurde das Reaktionsgemisch auf 105°C erhitzt, um das Wasser auszutreiben. Nach diesem Schritt erfolgte die Zugabe von 500 g Polyalphaolefin PAO 40, welches zuvor in einem separaten Gefäß auf 100°C erwärmt wurde, gefolgt von einem Auskochen des Ansatzes auf eine Endtemperatur von 205°C. Nachfolgend wurde das Fett auf 60°C abgekühlt und mittels einer Kolloidmühle homogenisiert.

### Beispiel 1: Herstellung eines Lithiumkomplexseifen-Schmierfettes mit Azelainsäure

In einem beheizbarem Reaktionsgefäß mit Rührwerk wurden 39,0 g Azelainsäure und 160 g Wasser vorgelegt. Die Mischung wurde auf 60°C erwärmt und 18,2 g Lithiumhydroxid in Pulverform zugegeben.

Nach 30 Minuten Reaktionszeit wurden 186,0 g 12-Hydroxystearinsäure zugegeben und das Gemisch auf 85°C erwärmt. Es folgt die Zugabe von 550 g Polyalphaolefin PAO 40. Das Gemisch wird zu einer homogenen Masse gerührt und 26,9 g Lithiumhydroxid in Pulverform zugegeben, gefolgt von einer 30-minütigen Reaktionszeit.

Im Anschluss wurde das Gemisch auf 100°C erhitzt und weitere 380 g Polyalphaolefin PAO 40 zugegeben. Im Weiteren wurde das Reaktionsgemisch auf 105°C erhitzt, um restliches Wasser auszutreiben. Nach diesem Schritt erfolgte die Zugabe von 300 g Polyalphaolefin PAO 40, gefolgt von einem Auskochen des Ansatzes auf eine Endtemperatur von 205°C. Nachfolgend wurde das Fett auf 60°C abgekühlt und mittels einer Kolloidmühle homogenisiert.

In Tabelle 1 sind die Kenndaten des erfindungsgemäßen Fetts mit einem Fett, welches über eine konventionelle Route, nämlich gemäß dem Vergleichsbeispiel oben hergestellt wurde (Vergleich), vergleichend zusammengestellt.

**Tabelle 1**

| **Messwert** | **Methode** | **Vergleich** | **Erfindung** |
|---|---|---|---|
| RP-sofort [0,1mm] | DIN ISO 2137 | 232 | 213 |
| RP-24h [0,1mm] | DIN ISO 2137 | 209 | 200 |
| Δ(RP-sofort - RP-24h) | | 23 | 13 |
| WP60 [0,1mm] | DIN ISO 2137 | 250 | 220 |
| WP60000 [0,1mm] | DIN ISO 2137 | 280 | 268 |
| Δ(WP60-WP60.000) | | 30 | 48 |
| Tropfpunkt [°C] | DIN ISO 2176 | 291°C | 297°C |
| ÖA 100°C/18h [Gew.%] | DIN 51817 | 0,9% | 1,0% |

| | | | |
|---|---|---|---|
| RP = Ruhepenetration, ÖA = Ölabscheidung | | | |

Der Vorteil des nach dem erfindungsgemäßen Verfahren hergestellten Lithiumkomplexseifen-Schmierfettes liegt u.a. in der verbesserten Verdickerausbeute: die Walkpenetration WP60 zeigt ein deutlich festeres Fett.

### Beispiel 2: Herstellung eines Lithiumkomplexseifen-Schmierfettes mit Terephthalsäure

In einem beheizbaren Reaktionsgefäß mit Rührwerk wurden 35,0 g Terephthalsäure und 150 g Wasser vorgelegt. Die Mischung wurde auf 60°C erwärmt und 17,7 g Lithiumhydroxid in Pulverform zugegeben. Nach 30 Minuten Reaktionszeit wurden 190,1 g 12-Hydroxystearinsäure zugegeben und das Gemisch auf 85°C erwärmt. Es folgt die Zugabe von 550 g Polyalphaolefin PAO 40.

Das Gemisch wird zu einer homogenen Masse gerührt und 26,6 g Lithiumhydroxid in Pulverform zugegeben, gefolgt von einer 30-minütigen Reaktionszeit. Im Anschluss wurde das Gemisch auf 100°C erhitzt und weitere 380 g Polyalphaolefin PAO 40 zugegeben. Im Weiteren wurde das Reaktionsgemisch auf 105°C erhitzt, um restliches Wasser auszutreiben.

Nach diesem Schritt erfolgte die Zugabe von 300,8 g Polyalphaolefin PAO 40, gefolgt von einem Auskochen des Ansatzes auf eine Endtemperatur von 205°C. Nachfolgend wurde das Fett auf 60°C abgekühlt und mittels einer Kolloidmühle homogenisiert.

In der folgenden Tabelle sind die Kennwerte des Schmierfettes zusammengestellt. Da über den konventionellen Kochprozess keine Umsetzung mit Terephthalsäure möglich ist, können hier keine Vergleichsdaten angegeben werden.

**Tabelle 2**

| **Messwert** | **Methode** | **Erfindung** |
|---|---|---|
| RP-sofort [0,1mm] | DIN ISO 2137 | 243 |
| RP-24h [0,1mm] | DIN ISO 2137 | 233 |
| Δ(RP-sofort - RP-24h) | | 10 |
| WP60 [0,1mm] | DIN ISO 2137 | 271 |
| WP60000 [0,1mm] | DIN ISO 2137 | 261 |
| Δ(WP60-WP60.000) | | 10 |
| Tropfpunkt [°C] | DIN ISO 2176 | >300 |
| ÖA 100°C/18h [Gew.%] | DIN 51817 | 4,3 |

### Beispiel 3: Herstellung eines Lithiumkomplexseifen-Schmierfettes mit Sebacinsäure und mit Esteröl

In einem beheizbaren Reaktionsgefäß mit Rührwerk wurden 26,5 g Sebacinsäure und 160 g Wasser vorgelegt. Die Mischung wurde auf 60°C erwärmt und 11,5 g Lithiumhydroxid in Pulverform zugegeben. Nach 30 Minuten Reaktionszeit wurden 123,5 g 12-Hydroxystearinsäure zugegeben und das Gemisch auf 85°C erwärmt. Es folgt die Zugabe von 594,4 g eines Polyolesters (Viskosität 320 mm²/s bei 40°C). Das Gemisch wird zu einer homogenen Masse gerührt und 17,8 g Lithiumhydroxid in Pulverform zugegeben, gefolgt von einer 30-minütigen Reaktionszeit.

Im Anschluss wurde das Gemisch auf 100°C erhitzt und weitere 396,2 g des Polyolesters zugegeben. Im Weiteren wurde das Reaktionsgemisch auf 105°C erhitzt, um restliches Wasser auszutreiben. Nach diesem Schritt erfolgte die Zugabe von 330,2 g Polyolester, gefolgt von einem Auskochen des Ansatzes auf eine Endtemperatur von 205°C. Nachfolgend wurde das Fett auf 60°C abgekühlt und mittels einer Kolloidmühle homogenisiert.

In Tabelle 3 sind die Kenndaten dieses Fetts mit einem Fett, welches über eine konventionelle Route gemäß obigem Vergleichsbeispiel hergestellt wurde, vergleichend zusammengestellt.

**Tabelle 3**

| **Messwert** | **Methode** | **Vergleich** | **Erfindung** |
|---|---|---|---|
| RP-sofort [0,1mm] | DIN ISO 2137 | 278 | 273 |
| RP-24h [0,1mm] | DIN ISO 2137 | 251 | 238 |
| Δ(RP-sofort - RP-24h) | | 27 | 35 |
| WP60 [0,1mm] | DIN ISO 2137 | 297 | 277 |
| WP60000 [0,1mm] | DIN ISO 2137 | 321 | 304 |
| Δ(WP60-WP60.000) | | 24 | 27 |
| Tropfpunkt [°C] | DIN ISO 2176 | 290°C | 280°C |
| ÖA 100°C/18h [Gew.%] | DIN 51817 | 5,2% | 4,0% |
| Geruch | Nach Fettalkohol | deutlich | unauffällig |

Der Vorteil des Lithiumkomplexfetts über den neuen Prozess liegt darin, dass der eingesetzte Ester nicht (teil-)hydrolysiert wird. Beim konventionellen Prozess kann die Bildung von Fettalkoholen am Geruch festgestellt werden. Zusätzlich führt die neue Prozessroute zu einer verbesserten Verdickerausbeute.

### Beispiel 4: Herstellung eines Lithiumkomplexseifen-Schmierfettes mit Sebacinsäure in Polyalphaolefin

In einem beheizbaren Reaktionsgefäß mit Rührwerk wurden 49,4g Sebacinsäure sowie 150g Wasser vorgelegt. Die Mischung wurde unter Rühren auf 60°C erwärmt.

Zu der Mischung wurden 20,5 Gramm trockenes Lithiumhydroxid in Pulverform gegeben und 30 Minuten bei gleichbleibender Temperatur gerührt. Anschließend wurden 186,0g 12-Hydroxystearinsäure zugegeben und das Gemisch unter Rühren auf 85°C erwärmt. Es folgte die Zugabe von 550g Polyalphaolefin 40, welches zuvor auf 100°C vorgewärmt wurde. Nach erfolgtem Mischen wurden 26,0g trockenes Lithiumhydroxid in Pulverform zugegeben. Im Anschluss erfolgte eine 30-minütige Reaktionszeit unter Rühren. Das Reaktionsgemisch wurde auf 100°C erhitzt, gefolgt von der Zugabe von 365g Polyalphaolefin 40 ( vorgewärmt auf 100°C ). Im weiteren Verlauf wurde die Mischung zur Entwässerung auf 105°C erhitzt. Nach Erreichen von 105°C wurden 303,1g Polyalphaolefin 40 zugegeben und der Ansatz wurde im Verlauf von 2,5 Stunden auf eine Endtemperatur von 205°C erhitzt. Nachfolgend wurde das Fett auf 60°C abgekühlt und mittels einer Kolloidmühle homogenisiert. In Tabelle 4 sind die Kenndaten dieses Fetts mit einem Fett, welches über eine konventionelle Route gemäß obigem Vergleichsbeispiel hergestellt, vergleichend zusammengestellt.

**Tabelle 4**

| **Messwert** | **Methode** | **Vergleich** | **Erfindung** |
|---|---|---|---|
| RP-sofort [0,1mm] | DIN ISO 2137 | 226 | 221 |
| RP-24h [0,1mm] | DIN ISO 2137 | 197 | 207 |
| Δ(RP-sofort - RP-24h) | | 29 | 14 |
| WP60 [0,1mm] | DIN ISO 2137 | 241 | 233 |
| WP60000 [0,1mm] | DIN ISO 2137 | 305 | 258 |
| Δ(WP60-WP60.000) | | 64 | 25 |
| Tropfpunkt [°C] | DIN ISO 2176 | 291°C | 290°C |
| ÖA 100°C/18h [Gew.%] | DIN 51817 | 0,6% | 1,4% |

Der Vorteil des Lithiumkomplexfetts über den neuen Prozess liegt zum einen in der deutlich höheren mechanischen Stabilität (geringere ΔWP60/WP60.000) und zum anderen in der geringeren Nachhärtung in Ruhe.

Zusammenfassend kann in Hinblick auf die Eigenschaften der erfindungsgemäß hergestellten Lithiumkomplexfette gesagt werden, dass der neue Herstellungsprozess:
- zu einer verbesserten Verdickerausbeute führt, wodurch Schmierfette gleicher Konsistenz günstiger hergestellt werden können,
- abhängig vom verwendeten Basisöl, der Verdicker eine verbesserte Walkstabilität aufweist,
- erstmalig die Lithiumkomplexfette mit Terephthalatverdickeranteil hergestellt werden können,
- Lithiumkomplexfette mit wenig hydrolysestabilen Esterölen hergestellt werden können,
- zusätzlich kann das erfindungsgemäße Verfahren schneller durchgeführt werden und bietet eine erhöhte Arbeitssicherheit, da die Lauge nicht separat hergestellt und zugegeben werden muss.

Die nachfolgenden beiden Beispiele beschreiben die Herstellung von gemischten Lithium-Calciumkomplexseifen-Schmierfetten beziehungsweise Calcium-Lithiumkomplexseifen-Schmierfetten.

### Beispiel 5: Herstellung eines Lithium-Calciumkomplexseifen-Schmierfettes mit Sebacinsäure

In einem beheizbaren Reaktionsgefäß mit Rührwerk wurden 38,6g Sebacinsäure, 14,1g Calciumhydroxid sowie 150g Wasser vorgelegt. Die Mischung wurde unter Rühren auf 90°C erhitzt. Danach wurden 180,0g 12-Hydroxystearinsäure zugegeben und 30 Minuten gemischt, bis eine teigartige Masse entstanden war. Zu der Reaktionsmischung wurden 500g Polyalphaolefin 8 (vorgewärmt auf 100°C) unter Rühren gegeben und für 30 Minuten gemischt. Danach wurden zu dieser Mischung 25,2g trockenes Lithiumhydroxid in Pulverform gegeben und das Reaktionsgemisch 30 Minuten bei unveränderter Temperatur gerührt. Im Anschluss wurde das Reaktionsgemisch auf 100°C erhitzt, gefolgt von einer Zugabe von 300g vorgewärmtem Polyalphaolefin 8. Im weiteren Verlauf wurde der Sud auf 105°C erhitzt, wobei die Entwässerung des Ansatzes geschieht. Nach Erreichen von 105°C wurden 442,2g Polyalphaolefin 8 zugegeben und der Ansatz wurde im Verlauf von 2,5 Stunden auf eine Endtemperatur von 205°C erhitzt. Nachfolgend wurde das Fett auf 60°C abgekühlt und mit einer Kolloidmühle homogenisiert.

In der folgenden Tabelle sind die Kenndaten des Lithium-Calcium-Komplexfetts zusammengestellt.

**Tabelle 5**

| **Messwert** | **Methode** | **Konventioneller Prozess** | **Neuer Prozess** |
|---|---|---|---|
| RP-sofort [0,1mm] | DIN ISO 2137 | 289 | 295 |
| RP-24h [0,1mm] | DIN ISO 2137 | 249 | 276 |
| Δ(RP-sofort - RP-24h) | | 40 | 19 |
| WP60 [0,1mm] | DIN ISO 2137 | 307 | 306 |
| WP60000 [0,1mm] | DIN ISO 2137 | 349 | 344 |
| Δ(WP60-WP60.000) | | 42 | 38 |
| Tropfpunkt [°C] | DIN ISO 2176 | 257 | 263 |
| ÖA 100°C/18h [Gew.%] | DIN 51817 | 10 | 6,8 |
| Wasserbeständigkeit | DIN 51807-1 | | |
| 40°C [BWST] | | 0 | 0 |
| 90°C [BWST] | | 0 | 0 |

Durch die Bildung des Lithium-Calcium-Komplexseifen-Schmierfetts liegt der Tropfpunkt auf hohem Niveau. Im Vergleich zum konventionellen (in Basisöl gestarteten) Prozess liefert das erfindungsgemäße Verfahren ein Schmierfett mit erhöhter Konsistenzstabilität und reduzierter Ölabscheidung. Die Wasserbeständigkeit liegt auch bei 90°C heißem Wasser mit Beständigkeitsstufe 0 (BWST 0) auf einem hohen Niveau. Hier wirkt sich die Wirkung des Calciumseifenanteils positiv aus.

Im Vergleich zu einem reinen Lithiumkomplexfett können 30-40% Lithiumhydroxid eingespart werden, was sich günstig auf die Einstandskosten auswirkt.

### Beispiel 6: Herstellung eines Calcium-Lithiumkomplexseifen-Schmierfettes mit Sebacinsäure

In einem beheizbaren Reaktionsgefäß mit Rührwerk wurden 26,0g Sebacinsäure in 150g Wasser vorgelegt und auf 60°C erwärmt. Unter Rühren wurden 11,3g Lithiumhydroxid in Pulverform zugegeben und das Gemisch 30 Minuten lang gerührt, um eine vollständige Reaktion zu gewährleisten. Die Mischung wurde unter Rühren auf 85°C erhitzt, 121,5g 12-Hydroxystearinsäure zugegeben und bis zur Bildung einer homogenen Mischung gerührt.

Zu dieser wurden 600g einer 1:1-Mischung bestehend aus einem Gruppe I Öl (SN600) und einem naphthenischen Basisöl (T110) gegeben und unter Rühren homogenisiert. Im Anschluss wurden 15,0g Calciumhydroxid in Pulverform zugegeben und das Gemisch 30 Minuten bei 85°C gerührt, um eine vollständige Verseifung zu gewährleisten. Im Anschluss wurde das Reaktionsgemisch auf 100°C erhitzt, gefolgt von einer Zugabe von 400g des oben beschriebenen Basisöls, das auf 100°C vorgewärmt war. Im weiteren Verlauf wurde der Sud auf 105°C erhitzt, wobei die Entwässerung des Ansatzes geschieht. Im Anschluss wurden weitere 326,2 Gramm des vorgewärmten Basisöls zugegeben. Nachdem der Ansatz entwässert war, wurde die Endtemperatur von 150°C gesteigert. Nach dem Abkühlen des Ansatzes auf 60°C erfolgte die Homogenisierung mit der Kolloidmühle.

**Tabelle 6**

| **Messwert** | **Methode** | **Konventioneller Prozess** | **Neuer Prozess** |
|---|---|---|---|
| RP-sofort [0,1mm] | DIN ISO 2137 | 308 | 294 |
| RP-24h [0,1mm] | DIN ISO 2137 | 291 | 289 |
| Δ(RP-sofort - RP-24h) | | 17 | 5 |
| WP60 [0,1mm] | DIN ISO 2137 | 311 | 304 |
| WP60000 [0,1mm] | DIN ISO 2137 | 348 | 328 |
| Δ(WP60-WP60.000) | | 37 | 24 |
| Tropfpunkt [°C] | DIN ISO 2176 | 200 | 196 |
| ÖA 40°C/18h [Gew.%] | DIN 51817 | 1,2 | 2,0 |
| ÖA 100°C/18h [Gew.%] | DIN 51817 | 7,0 | 7,9 |
| Wasserbeständigkeit | | | |
| 40°C [BWST] | DIN 51807-1 | 0 | 0 |
| 90°C [BWST] | DIN 51807-1 | 1 | 1 |

Durch die Bildung der Calcium-Lithiumkomplexseife liegt der Tropfpunkt unterhalb des Niveaus des Lithium-Calciumkomplexfetts aus Beispiel 5. Die neue Prozessroute bringt im Vergleich zur konventionellen Route Schmierfette mit besserer mechanischer Stabilität und leicht verbesserter Verdickerausbeute hervor. Das Calcium-Lithiumkomplexseifen-Schmierfett ist wirtschaftlich sehr attraktiv:
Das in Beispiel 6 beschriebene Grundfett kann als wirtschaftliche Alternative zu Lithium-12-Hydroxistearat-Fetten angesehen werden. Zusätzlich ist der Herstellungsprozess energetisch günstiger, da mit einer vergleichsweise niedrigen Prozesstemperatur von 150°C gegenüber den üblichen >200°C gearbeitet wird.

Zusammenfassend kann gesagt werden, dass über den erfindungsgemäßen Herstellungsprozess auch Lithium-Calciumkomplexseifen-Schmierfette hergestellt werden können, die vor allem wirtschaftlich sehr attraktiv sind, eine ausgezeichnete Wasserbeständigkeit besitzen und über eine gute Konsistenzstabilität verfügen.

## Patentansprüche

1. Verfahren zur Herstellung von Lithiumkomplexseifen-Schmierfetten oder Lithium-Calciumkomplexseifen-Schmierfetten umfassend zumindest folgende Schritte:
- Verseifen einer oder mehrerer Dicarbonsäuren mit einem oder zwei Metallhydroxiden als Feststoff gemäß einer der folgenden drei Alternativen:
(A1) Verseifen mit Lithiumhydroxid und einer oder mehreren Dicarbonsäuren oder
(A2) Verseifen mit Lithiumhydroxid und Calciumhydroxid und einer oder mehreren Dicarbonsäuren, oder
(A3) Verseifen mit Calciumhydroxid und einer oder mehreren Dicarbonsäuren,
jeweils in einer wässrigen Umgebung, aufweisend in Bezug auf die flüssige Phase mehr als 80 Gew.% Wasser in Bezug auf alle flüssigen Einsatzstoffe, zum Erhalt eines oder mehrerer Metallsalze der Dicarbonsäuren, wobei beide Dicarboxylgruppen der Dicarbonsäuren im wesentlichen vollständig verseift werden;
- in Kontakt bringen mit einer oder mehreren flüssigen oder durch Erwärmen verflüssigten Hydroxyfettsäuren und Lösen des oder der Metallsalze in der flüssigen Hydroxyfettsäure;
- in Kontakt bringen mit Basisöl;
- Zugabe weiterer Metallhydroxide, wobei nach Alternative:
(A1) Lithiumhydroxid oder Calciumhydroxid;
(A2) Lithiumhydroxid und Calciumhydroxid oder nur Lithiumhydroxid oder nur Calciumhydroxid; oder
(A3) Lithiumhydroxid
zugegeben wird;
zur Verseifung mit der zumindest einen Hydroxyfettsäure;
- Austreiben von Wasser unter Erhitzen;
- Erhitzen auf eine Endtemperatur; und
- Abkühlen und Zugabe von weiterem Basisöl.

2. Verfahren nach Anspruch 1, wobei die Verseifung der einen oder mehreren Dicarbonsäuren in der wässrigen Umgebung bei 20° bis 85°C, vorzugsweise 40 bis 70°C, erfolgt.

3. Verfahren nach Anspruch 1 oder 2, wobei die Hydroxycarbonsäure durch Erwärmen verflüssigt wird und vorzugsweise vor dem in Kontaktbringen auf über 60°C erwärmt wird.

4. Verfahren nach zumindest einem der vorhergehenden Ansprüche, wobei die Verseifung der einen oder mehreren Hydroxycarbonsäuren bei einer Temperatur über 80°C erfolgt.

5. Verfahren nach zumindest einem der vorhergehenden Ansprüche, wobei die Austreibtemperatur zum Austreiben von Wasser zumindest 100°C beträgt, vorzugsweise größer 105°C.

6. Verfahren nach zumindest einem der vorhergehenden Ansprüche, wobei die Endtemperatur größer 120°C beträgt, insbesondere 190 bis 210°C.

7. Verfahren nach zumindest einem der vorhergehenden Ansprüche, wobei nach Erreichen der Endtemperatur abgekühlt wird und weiteres Basisöl, Additive, Festschmierstoffe und/oder eine weitere Verdickerkomponente unter 120°C oder vorzugsweise unter 80°C zugesetzt werden.

8. Verfahren nach zumindest einem der vorhergehenden Ansprüche, wobei das Basisöl eine kinematische Viskosität von 20 bis 2500 mm²/s, insbesondere von 40 bis 500 mm²/s, jeweils bei 40 °C aufweist.

9. Verfahren nach zumindest einem der vorhergehenden Ansprüche, wobei die ein oder mehreren Dicarbonsäuren aliphatische Dicarbonsäuren mit 6 bis 12 Kohlenstoffatomen oder cyclo-aliphatische oder aromatische Dicarbonsäuren mit 8 bis 12 Kohlenstoffatomen sind.

10. Verfahren nach zumindest einem der vorhergehenden Ansprüche, wobei die ein oder mehreren Hydroxycarbonsäuren 12 bis 30 Kohlenstoffatome, vorzugsweise 16 bis 20 Kohlenstoffatome, aufweisen.

11. Verfahren nach zumindest einem der vorhergehenden Ansprüche, wobei Hydroxycarbonsäure zu Dicarbonsäure in einem molaren Verhältnis von 1:1 bis 10:1 eingesetzt werden.

12. Verfahren nach zumindest einem der vorhergehenden Ansprüche, wobei die Metallhydroxide in Substanz, vorzugsweise in Pulverform eingesetzt werden.

13. Verfahren nach zumindest einem der vorhergehenden Ansprüche, wobei die Lithiumkomplexseifen-Schmierfette aufweisen:
a) 55 bis 95 Gew.% insbesondere 70 bis 90 Gew.%, des Basisöls;
b) 5 bis 25 Gew.%, insbesondere 5 bis 20 Gew.%, der Lithiumkomplexseife; und ggf. folgende fakultative Komponenten:
c) 0 bis 40 Gew.%, insbesondere 0,5 bis 10 Gew.%, Additive;
d) 0 bis 20 Gew.%, insbesondere 0 bis 5 Gew.%, anorganische Verdicker; und
e) 0 bis 20 Gew.%, insbesondere 0,1 bis 15 Gew.%, Festschmierstoffe.

14. Verfahren nach zumindest einem der vorhergehenden Ansprüche 1 bis 12, wobei die Lithium-Calciumkomplexseifen-Schmierfette aufweisen:
a) 55 bis 95 Gew.% insbesondere 70 bis 90 Gew.%, des Basisöls;
b) 5 bis 25 Gew.%, insbesondere 5 bis 20 Gew.%, der Lithium-Calciumkomplexseife, wobei das Gewichtsverhältnis in Bezug auf das eingesetzte Lithiumhydroxid zu Calciumhydroxid 1 zu 9 bis 9 zu 1 beträgt,
und ggf. folgende fakultative Komponenten:
c) 0 bis 40 Gew.%, insbesondere 0,5 bis 10 Gew.%, Additive;
d) 0 bis 20 Gew.%, insbesondere 0 bis 5 Gew.%, anorganische Verdicker; und
e) 0 bis 20 Gew.%, insbesondere 0,1 bis 15 Gew.%, Festschmierstoffe.

15. Lithiumkomplexseifen-Schmierfette oder Lithium-Calciumkomplexseifen-Schmierfett hergestellt nach dem Verfahren nach zumindest einem der vorhergehenden Ansprüche, vorzugsweise mit einem Tropfpunkt von über 260°C für die Lithiumkomplexseifen-Schmierfette und vorzugsweise mit einem Tropfpunkt von über 190°C für die Lithium-Calciumkomplexseifen-Schmierfette.

16. Verwendung der Lithiumkomplexseifen-Schmierfette oder Lithium-Calcium-komplexseifen-Schmierfette nach Anspruch 15 für Gleitlager und Wälzlager.

## Claims

1. Method for the producing of lithium complex soap lubricating greases or lithium-calcium complex soap lubricating greases comprising at least the following steps:
- saponification of one or more dicarboxylic acids with one or two metal hydroxides as a solid according to one of the following three alternatives:
(A1) saponification with lithium hydroxide and one or more dicarboxylic acids, or
(A2) saponification with lithium hydroxide and calcium hydroxide and one or more dicarboxylic acids, or
(A3) saponification with calcium hydroxide and one or more dicarboxylic acids, each in an aqueous environment comprising, with respect to the liquid phase, more than 80 wt.% of water with respect to all liquid feedstocks, to obtain one or more metal salts of the dicarboxylic acids, wherein both dicarboxyl groups of the dicarboxylic acids are substantially completely saponified;
- bringing into contact with one or more liquid hydroxy fatty acids or hydroxy fatty acids liquefied by heating and dissolving the metal salt(s) in the liquid hydroxy fatty acid;
- bringing into contact with base oil;
- addition of further metal hydroxides, wherein according to alternative:
(A1) lithium hydroxide or calcium hydroxide;
(A2) lithium hydroxide and calcium hydroxide or lithium hydroxide only or calcium hydroxide only; or
(A3) lithium hydroxide
is added;
for saponification with the at least one hydroxy fatty acid;
- expulsion of water under heating;
- heating to a final temperature; and
- cooling down and addition of more base oil.

2. Method according to claim 1, wherein the saponification of the one or more dicarboxylic acids in the aqueous environment takes place at 20° to 85°C, preferably 40 to 70°C.

3. Method according to claim 1 or 2, wherein the hydroxycarboxylic acid is liquefied by heating and is preferably heated to above 60°C before being brought into contact.

4. Method according to at least one of the preceding claims, wherein the saponification of the one or more hydroxycarboxylic acids takes place at a temperature above 80°C.

5. Method according to at least one of the preceding claims, wherein the expulsion temperature for the expulsion of water is at least 100°C, preferably greater than 105°C.

6. Method according to at least one of the preceding claims, wherein the final temperature is greater than 120°C, in particular 190 to 210°C.

7. Method according to at least one of the preceding claims, wherein, after reaching the final temperature, cooling is carried out and further base oil, additives, solid lubricants and/or a further thickener component are added below 120°C or preferably below 80°C.

8. Method according to at least one of the preceding claims, wherein the base oil has a kinematic viscosity of from 20 to 2500 mm² /s, in particular from 40 to 500 mm² /s, in each case at 40 °C.

9. Method according to at least one of the preceding claims, wherein the one or more dicarboxylic acids are aliphatic dicarboxylic acids having 6 to 12 carbon atoms or cyclo-aliphatic or aromatic dicarboxylic acids having 8 to 12 carbon atoms.

10. Method according to at least one of the preceding claims, wherein the one or more hydroxycarboxylic acids comprise 12 to 30 carbon atoms, preferably 16 to 20 carbon atoms.

11. Method according to at least one of the preceding claims, wherein hydroxycarboxylic acid and dicarboxylic acid are used in a molar ratio of 1:1 to 10:1.

12. Method according to at least one of the preceding claims, wherein the metal hydroxides are used in bulk, preferably in powder form.

13. Method according to at least one of the preceding claims, wherein the lithium complex soap lubricating greases comprise:
a) 55 to 95 wt.%, in particular 70 to 90 wt.%, of the base oil;
b) 5 to 25 wt.%, in particular 5 to 20 wt.%, of the lithium complex soap;
and, and optionally the following optional components:
c) 0 to 40 wt. %, in particular 0.5 to 10 wt.%, of additives;
d) 0 to 20 wt.%, in particular 0 to 5 wt.%, of inorganic thickeners; and
e) 0 to 20 wt.%, in particular 0.1 to 15 wt.%, of solid lubricants.

14. Method according to at least one of the preceding claims 1 to 12, wherein the lithium-calcium complex soap lubricating greases comprise:
a) 55 to 95 wt.%, in particular 70 to 90 wt.%, of the base oil;
b) 5 to 25 wt.%, in particular 5 to 20 wt.%, of the lithium-calcium complex soap, wherein the weight ratio in relation to the lithium hydroxide to calcium hydroxide used is 1:9 to 9:1,
and optionally the following optional components:
c) 0 to 40 wt.%, in particular 0.5 to 10 wt.%, of additives;
d) 0 to 20 wt.%, in particular 0 to 5 wt.%, of inorganic thickeners; and
e) 0 to 20 wt.%, in particular 0.1 to 15 wt.%, of solid lubricants.

15. Lithium complex soap lubricating greases or lithium-calcium complex soap lubricating grease produced by the method according to at least one of the preceding claims, preferably with a dropping point of above 260°C for the lithium complex soap lubricating greases and preferably with a dropping point of above 190°C for the lithium-calcium complex soap lubricating greases.

16. Use of the lithium complex soap lubricating greases or lithium-calcium complex soap lubricating greases according to claim 15 for slide bearings and rolling bearings.

## Revendications

1. - Procédé de fabrication de graisses lubrifiantes de savons complexes de lithium ou de graisses lubrifiantes de savons complexes de lithium et de calcium, comportant au moins les étapes suivantes :
- saponification d'un ou plusieurs acides dicarboxyliques par un ou deux hydroxydes métalliques en tant que solide selon l'une des trois alternatives suivantes :
(A1) saponification par de l'hydroxyde de lithium et un ou plusieurs acides dicarboxyliques ou
(A2) saponification par de l'hydroxyde de lithium et de l'hydroxyde de calcium et un ou plusieurs acides dicarboxyliques, ou
(A3) saponification par de l'hydroxyde de calcium et un ou plusieurs acides dicarboxyliques,
à chaque fois dans un environnement aqueux, comprenant en ce qui concerne la phase liquide plus de 80 % en poids d'eau par rapport à toutes les matières premières liquides, pour obtenir un ou plusieurs sels métalliques des acides dicarboxyle, les deux groupes dicarboxyle des acides dicarboxyliques étant sensiblement entièrement saponifiés ;
- mise en contact avec un ou plusieurs acides gras hydroxylés liquides ou liquéfiés par chauffage et dissolution du ou des sels métalliques dans l'acide gras hydroxylé liquide ;
- mise en contact avec de l'huile de base ;
- addition d'autres hydroxydes métalliques, où est ajouté selon la variante :
(A1) de l'hydroxyde de lithium ou de l'hydroxyde de calcium ;
(A2) de l'hydroxyde de lithium et de l'hydroxyde de calcium, ou de l'hydroxyde de lithium seulement, ou de l'hydroxyde de calcium seulement ; ou
(A3) de l'hydroxyde de lithium ;
pour la saponification avec ledit au moins un acide gras hydroxylé ;
- expulsion de l'eau sous chauffage ;
- chauffage à une température finale ; et
- refroidissement et addition d'huile de base supplémentaire.

2. - Procédé selon la revendication 1, dans lequel la saponification de ou des acides dicarboxyliques dans l'environnement aqueux est effectuée à une température de 20° à 85°C, de préférence de 40 à 70°C.

3. - Procédé selon l'une des revendications 1 ou 2, dans lequel l'acide hydroxycarboxylique est liquéfié par chauffage et est, de préférence, chauffé à plus de 60°C avant la mise en contact.

4. - Procédé selon au moins l'une des revendications précédentes, dans lequel la saponification du ou des acides hydroxycarboxyliques est réalisée à une température de plus de 80°C.

5. - Procédé selon au moins l'une des revendications précédentes, dans lequel la température d'expulsion pour l'expulsion de l'eau s'élève à au moins 100°C, de préférence est supérieure à 105°C.

6. - Procédé selon au moins l'une des revendications précédentes, dans lequel la température finale s'élève à plus de 120°C, étant en particulier de 190 à 210°C.

7. - Procédé selon au moins l'une des revendications précédentes, dans lequel, une fois la température finale atteinte, on refroidit et on ajoute de l'huile de base supplémentaire, des additifs, des lubrifiants solides et/ou un autre composant épaississant à une température inférieure à 120°C ou, de préférence, inférieure à 80°C.

8. - Procédé selon au moins l'une des revendications précédentes, dans lequel l'huile de base présente une viscosité cinématique de 20 à 2500 mm²/s, en particulier de 40 à 500 mm²/s, à chaque fois à 40°C.

9. - Procédé selon au moins l'une des revendications précédentes, dans lequel ledit ou lesdits acides dicarboxyliques sont des acides dicarboxyliques aliphatiques ayant de 6 à 12 atomes de carbone ou des acides dicarboxyliques cyclo-aliphatiques ou aromatiques ayant de 8 à 12 atomes de carbone.

10. - Procédé selon au moins l'une des revendications précédentes, dans lequel ledit ou lesdits acides hydroxycarboxyliques présentent de 12 à 30 atomes de carbone, de préférence de 16 à 20 atomes de carbone.

11. - Procédé selon au moins l'une des revendications précédentes, dans lequel l'acide hydroxycarboxylique et l'acide dicarboxylique sont utilisés dans un rapport molaire acide hydroxycarboxylique : acide dicarboxylique de 1 :1 à 10 :1.

12. - Procédé selon au moins l'une des revendications précédentes, dans lequel les hydroxydes métalliques sont utilisés dans la masse, de préférence sous forme pulvérulente.

13. - Procédé selon au moins l'une des revendications précédentes, dans lequel les graisses lubrifiantes de savons complexes de lithium présentent :
a) de 55 à 95 % en poids, en particulier de 70 à 90 % en poids, de l'huile de base ;
b) de 5 à 25 % en poids, en particulier de 5 à 20 % en poids, du savon complexe de lithium ;
et le cas échéant les composants facultatifs suivants :
c) de 0 à 40 % en poids, en particulier de 0,5 à 10 % en poids, d'additifs ;
d) de 0 à 20 % en poids, en particulier de 0 à 5 % en poids, d'épaississants inorganiques ; et
e) de 0 à 20 % en poids, en particulier de 0,1 à 15 % en poids, de lubrifiants solides.

14. - Procédé selon au moins l'une des revendications précédentes 1 à 12, dans lequel les graisses lubrifiantes de savons complexes de lithium et de calcium présentent :
a) de 55 à 95 % en poids, en particulier de 70 à 90 % en poids, de l'huile de base ;
b) de 5 à 25 % en poids, en particulier de 5 à 20 % en poids, du savon complexe de lithium et de calcium, le rapport pondéral en ce qui concerne le rapport de l'hydroxyde de lithium utilisé à l'hydroxyde de calcium utilisé étant de 1 à 9 à 9 à 1,
et le cas échéant les composants facultatifs suivants :
c) de 0 à 40 % en poids, en particulier de 0,5 à 10 % en poids d'additifs ;
d) de 0 à 20 % en poids, en particulier de 0 à 5 % en poids d'épaississants inorganiques ; et
e) de 0 à 20 % en poids, en particulier de 0,1 à 15 % en poids de lubrifiants solides.

15. - Graisses lubrifiantes de savons complexes de lithium ou graisses lubrifiantes de savons complexes de lithium et de calcium préparées par le procédé selon au moins l'une des revendications précédentes, de préférence ayant un point de goutte de plus de 260°C pour les graisses lubrifiantes de savons complexes de lithium et, de préférence, ayant un point de goutte de plus de 190°C pour les graisses lubrifiantes de savons complexes de lithium et de calcium.

16. - Utilisation des graisses lubrifiantes de savons complexes de lithium ou des graisses lubrifiantes de savons complexes de lithium et de calcium selon la revendication 15 pour des paliers lisses et des paliers à rouleaux.
